# EUROPEAN PATENT APPLICATION

(11) **EP 4 468 017 A1**
(43) Date of publication of application: **27.11.2024**
(21) Application number: 24175320.1
(22) Date of filing: 13.05.2024
(51) Int. Cl.: G01S 5/00, G01S 5/02, G01S 3/04, G01S 3/46, G01S 5/04

(54) **METHOD, DEVICE FOR POSITIONING AN OBJECT IN AN ITEM COMPRISING A CONFINED SPACE AND THE ITEM**

(30) Priority: 26.05.2023 CN 202310609650
(71) Applicant: Robert Bosch GmbH, 70442 Stuttgart (DE)
(72) Inventor: BAO, Chichen, Shanghai (CN)

(57) **Abstract**

A method for positioning an object in an item comprising a confined space is provided, the item comprising a fixed portion and a movable portion that can move relative to the fixed portion, the object to be positioned being placed in the fixed portion or the movable portion, the method comprising acquiring motion data representing the movement of the movable portion relative to the fixed portion; acquiring received signals from a receiver disposed in a portion different from the portion where the object is placed in the item such that the receiver can move relative to the object when the movable portion moves relative to the fixed portion, and the receiver can receive the corresponding received signals in response to the signals transmitted by the transmitter disposed on the object when it moves relative to the object; and positioning the object in the confined space based on the motion data and the received signals. As such, more accurate positioning of objects may be achieved with fewer receivers.

## Description

### Technical Field

The present disclosure relates to the field of the Internet of Things, particularly the positioning of objects.

### Background Art

With the development of Internet of Things technology, angle of arrival (AOA) technique is applied to the positioning of objects. For example, a wide variety of loose objects need to be stored in a home, many of which are not used frequently, and where a certain object is needed, the user is likely to have forgotten the storage location of the object, making it difficult to find it. In particular, when the object is stored in a confined space (e.g., a refrigerator, a wardrobe, a cabinet, and the like) accumulated with many types of loose objects, the user may need to rummage aimlessly or remove all of the objects and store them again. Using the AOA technique, a transmitter, such as a Bluetooth beacon device, can be provided on the object to transmit signals; and the transmitted signals are received via a receiver, such as a receiver comprising a plurality of receiving antennas, which then calculates the AOA based on the received signals, thereby positioning the object based on the AOA and helping the user find the desired object.

At present, the respective AOA of each of a plurality of receivers provided at different positions can be determined to more accurately position the object. However, it is still desirable to provide improved positioning of objects.

### Summary of the Invention

It is desirable to provide a method and a device for positioning an object in an item comprising a confined space to achieve more accurate positioning of the object, or even to acquire the three-dimensional position of the object, with fewer receivers.

According to an aspect, a method for positioning an object in an item comprising a confined space is provided, the item comprising a fixed portion and a movable portion that can move relative to the fixed portion, the object being placed in the fixed portion or the movable portion, the method comprising acquiring motion data representing the movement of the movable portion relative to the fixed portion; acquiring received signals from a
receiver disposed in a portion different from the portion in which the object is placed in the item such that the receiver can move relative to the object when the movable portion moves relative to the fixed portion, and the receiver can receive the corresponding received signals in response to the signals transmitted by the transmitter disposed on the object when it moves relative to the object; and positioning the object in the confined space based on the motion data and the received signals.

According to another aspect, a device for positioning an object in an item comprising a confined space is provided, the item comprising a fixed portion and a movable portion that can move relative to the fixed portion, the object being placed in the fixed portion or the movable portion, the device comprising an acquisition unit for acquiring motion data representing the movement of the movable portion relative to the fixed portion and received signals from a receiver disposed in a portion different from the portion in which the object is placed in the item such that the receiver can move relative to the object when the movable portion moves relative to the fixed portion, and the receiver can receive the corresponding received signals in response to the signals transmitted by the transmitter disposed on the object when it moves relative to the object; and a positioning unit for positioning the object in the confined space based on the motion data and the received signals.

According to another aspect, an item comprising a confined space is provided, the item comprising a fixed portion and a movable portion that can move relative to one another, where the fixed portion or the movable portion can be used to place the object, the item comprising a device for positioning an object in the item comprising a confined space according to various examples of the present disclosure.

According to yet another aspect, a computer-readable medium that stores a computer program is provided and when the computer program is executed by a processor, causes the processor to perform the method according to various examples of the present disclosure.

According to various examples of various aspects of the present disclosure, by disposing the receiver and object separately in different portions of the fixed portion and movable portion of the item, the receiver and object can move relative to each other with the movement of the movable portion when the movable portion of the item moves relative to the fixed portion, and the receiver receives the corresponding received signals in response to the signals transmitted by the transmitter disposed on the object when it moves relative to the object. Hence, received signals at a plurality of different positions in the direction of movement of the movable portion relative to the fixed portion can be acquired, and this is equivalent to disposing a series of receivers at a plurality of different positions on the relative motion path of the movable portion and fixed portion.
As such, fewer receivers can be utilized to achieve more accurate positioning of objects.

According to further examples, the receiver comprises at least two receiving antennas arranged in a direction intersecting the direction of movement of the movable portion relative to the fixed portion. In the case where the receiver comprises a plurality of receiving antennas arranged as a two-dimensional array, the plurality of receiving antennas may be arranged within a plane intersecting the direction of movement of the movable portion relative to the fixed portion, which allows the two-dimensional array receiver to achieve three-dimensional positioning of the object in the confined space, thereby positioning the object more accurately.

### Description of Accompanying Drawings

In the accompanying drawings, the examples are illustrated by way of example only, not by way of limitation, with like reference numerals referring to like elements in the accompanying drawings.
Fig. 1 shows a flow chart of a method for positioning an object in an item comprising a confined space according to an example of the present disclosure;
Fig. 2 shows a block diagram of a device for positioning an object in an item comprising a confined space according to an example of the present disclosure;
Figs 3-4 show an item with a confined space and the different states thereof according to different examples of the present disclosure.

Various aspects and features of the various examples of the present disclosure are described with reference to the accompanying drawings above. The accompanying drawings above are merely illustrative and not limiting. In addition, not all portions of the device according to the examples of the present disclosure in the accompanying drawings above are shown with reference numerals, and only the relevant components are shown in some accompanying drawings. This does not limit the various portions merely to that shown in the accompanying drawings of the Specification.

### Specific Embodiments

At present, for more accurate positioning of objects, a plurality of receivers are often provided at different positions. For example, each receiver comprises a plurality of receiving antennas to receive the signals transmitted from a transmitter disposed on the object from different positions, and then determines the corresponding AOA data based on the received signals of each receiving antenna, thereby determining the position of the item based on these AOA data. The algorithm that measures the AOA data and determines the position of the object based on the AOA data is known.

Although providing a plurality of receivers at different positions may achieve more accurate positioning of objects, this increases the number of receivers and consequently costs. In addition, where there are many objects, objects other than the object to be positioned may block a certain or some receivers, in which case signals are reflected during non-line-of-sight propagation, and the measurement would be inaccurate. Further increase in receivers for accuracy of object positioning would further increase costs.

The inventors of the present application have designed a method for positioning of objects in view of the above. The method for positioning of objects can position an object in an item comprising a confined space, the item comprising a fixed portion and a movable portion that can move relative to the fixed portion, and the object to be positioned can be placed in any of the fixed portion and movable portion. The confined space may be located in the fixed portion, or in the movable portion, and the object is typically placed in the confined space for storage. It should be noted that the confined space may either be a completely enclosed space or a non-fully enclosed space. The item may be any type of item that can hold/store the object to be positioned, including a refrigerator, wardrobe, cabinet, drawer and the like in daily life, and certainly not excluding boxes (carriages, containers, and the like) containing goods during freight and storage, and even including micro-warehouses (if the transmission signal is strong enough).

Take a refrigerator as an example, the fixed portion thereof comprises the body of the refrigerator, the movable portion comprises the various doors of the refrigerator, and the object to be positioned is placed in the body. Take a drawer as an example, the fixed portion thereof comprises the frame of the drawer, the movable portion comprises the retractable body of the drawer, and the object to be positioned is placed in the retractable body. The following is primarily described with reference to the refrigerator and drawer as examples, but this is not limiting, and the various examples of the present disclosure may also be applied to other items with similar structures. For example, the item may be a smart container.

By disposing the receiver and object separately in different portions of the fixed portion and movable portion of the item, i.e., disposing the receiver in a portion of the item different from the portion in which the object is placed, the receiver and object can move relative to each other with the movement of the movable portion when the movable portion of the item moves relative to the fixed portion, and the receiver receives the corresponding received signals in response to the signals transmitted by the transmitter disposed on the object when it moves relative to the object. This is equivalent to disposing a series of receivers at a plurality of different positions on the relative motion path of the movable portion and fixed portion. As such, received signals at a plurality of different positions can be acquired.

On the basis of such received signals, in conjunction with the detection of the relative motion data of the movable portion and fixed portion, and based on the received signals and corresponding motion data at the plurality of different positions, it is apparent that more accurate positioning of objects can be achieved. For example, when positioning an object with a receiver that comprises a one-dimensional array of antennas, the antenna array contained by the receiver comprises at least two receiving antennas arranged in a direction intersecting the direction of movement of the movable portion relative to the fixed portion rather than in parallel, which is equivalent to adding a detection dimension in the relative motion direction of the movable portion and the fixed portion. As such, the two-dimensional position of the object can be detected. For example, when positioning an object with a receiver comprising a two-dimensional array of receiving antennas, the three-dimensional position of the object can be detected by adding the above detection dimension as the two-dimensional array itself can perform detection with two dimensions.
According to the method 100, in step 110, motion data representing the movement of the movable portion of the item relative to the fixed portion (may also be described as the receiver relative to the object) is acquired.

Any type of motion data that can represent the movement of the movable portion relative to the fixed portion may be considered, such as distance and/or angle. The motion data may be acquired by a motion sensor, or after processing data sensed via the motion sensor. The motion sensor may comprise an accelerometer, a gyroscope, an inertial sensor, and the like. In an example, the motion data may even be acquired by a transmitter for motion detection, such as a Bluetooth low-power transmitter, and a corresponding receiver. In this case, in an example, signals from the transmitter for motion detection may be received by a particular receiving antenna in the receiver, and the relative motion between the receiver and the transmitter for motion detection, in particular the angle, is then determined based on the received signals. This allows for the relative motion of the movable portion relative to the fixed portion to be determined. In the Specification, the relative motion of the movable portion relative to the fixed portion and the relative motion between the receiver and the object refers to the same motion, and the motion data refer to data representing the relative motion.

The motion sensor may be positioned in any portion of the item so long as it can detect the relative motion of the movable portion and the fixed portion when there is movement of the movable portion. In an example, the motion sensor is disposed in the movable portion, such as in the retractable portion of a drawer or on the door of a refrigerator, or on the object to be positioned that moves with the movable portion, for example, an accelerometer may be employed; in another example, a Bluetooth low-power transmitter, for example, is disposed in the fixed portion, such as the body positioned on a refrigerator, to detect motion data.

In step 120, received signals from the receiver are acquired. As described above, the receiver is disposed in a portion different from the portion in which the object is placed in the item. For example, the receiver is placed in the movable portion, and the object is placed in the movable portion, or vice versa, such that the receiver can move relative to the object when the movable portion of the item moves relative to the fixed portion. For example, for a refrigerator, the object is placed in the body and the receiver may be disposed on the door of the refrigerator; for a drawer, the object is placed in the retractable body that serves as the movable portion and the receiver is disposed on the frame that serves as the fixed portion; even for a refrigerator, the object may be placed in a rack on the refrigerator door, while the receiver is disposed at a certain position within the body. When the user wants to look for (position) a certain object in the item, he moves the movable portion, such as by opening the refrigerator door or pulling out the retractable body of the drawer, and at this time, as the movable portion moves relative to the fixed portion, the receiver and the object move relative to each other. During this time, the receiver can receive the corresponding signals in response to the signals transmitted by the transmitter disposed on the object relative to the time the object to be positioned moves, in particular it can receive signals at a plurality of positions (relative position of the receiver and object) when the receiver moves relative to the object.

Although it is primarily described that receiver can receive signals when the above relative motion occurs, this is not limiting, and the receiver may be conceived to be capable of continuously receiving signals. The received signals are received in response to the signals transmitted by the transmitter positioned on the object to be positioned. In an example, the transmitter comprises a Bluetooth low-power beacon device and the receiver comprises a corresponding array of receiving antennas.

The antenna array contained by the receiver comprises at least two receiving antennas arranged in a direction intersecting the direction of movement of the movable portion relative to the fixed portion rather than in parallel. In this way, as the movable portion moves relative to the fixed portion and the receiver moves relative to the object to be positioned, a detection dimension can be added. In a particular case, the antenna array contained by the receiver comprises at least two receiving antennas arranged in a direction perpendicular to the movement of the movable portion relative to the fixed portion. This reduces computational complexity. In an example, the receiving antenna array is a one-dimensional array; and, in another example, the receiving antenna is a two-dimensional array. In particular, the two-dimensional position of the object to be positioned may be acquired by causing a plurality of receiving antennas in the one-dimensional array to be arranged to at least intersect the relative motion direction of the movable portion and the fixed portion rather than be in parallel. By causing the plurality of receiving antennas in the two-dimensional array to be arranged within a plane intersecting the direction of movement of the movable portion relative to the fixed portion, the three-dimensional position of the object to be positioned may be acquired, thereby improving the accuracy of the positioning.

In step 130, the object is positioned in a confined space based on the above acquired motion data and the received signals. In particular, after the above motion data and received signals are acquired, they may be matched to each other, i.e., the motion data indicating the movable portion relative to the fixed portion at different relative motion positions and the corresponding received signals at the position are matched, and then the object is positioned based on the matched motion data and received signals. In particular, the motion data and the received signals of the same timestamp may be matched, wherein the AOA technique is utilized based on the received signals to determine the azimuth of the object relative to the antenna, thereby matching the motion data and angle data (the azimuth of the object relative to the antenna) of the same timestamp and determining the position of the object at the timestamp based on the motion data and angle data of the same time stamp.

Take the two-dimensional array receiver as an example, in an example, not only can the AOA data in the direction corresponding to the two dimensions of the two-dimensional array be calculated and be used to determine the positioning of the object in these two dimensions, but the AOA data in the direction of the movement of the movable portion relative to the fixed portion can also be calculated, and the three-dimensional position of the object to be positioned may be determined based on the AOA data in the above three directions.

In particular, the received signals comprise a first received signal acquired by the receiver at a first position of the movable portion relative to the fixed portion and a second received signal acquired at a second position of the movable portion relative to the fixed portion, the motion data comprise first motion data at the first position and second motion data at the second position. The relative motion data between the first position and the second position are determined based on the first motion data and the second motion data. It may also be expected that the motion data itself includes relative motion data between the first position and the second position, for example, a situation in which the relative motion data can be directly detected by a sensor. The relative motion data may comprise a relative movement distance or a relative movement angle. The position, i.e., the position in the direction of movement of the movable portion relative to the fixed portion of the object is determined based on the first received signal, the second received signal, and the above relative motion data. The determined position of the object in the direction may be combined with the position of the object determined in two dimensions of the two-dimensional array itself to determine the three-dimensional position of the object.

In a specific example, a first azimuth of the object relative to the receiver at the first position and a second azimuth of the object relative to the receiver at the second position can be respectively determined based on the first received signal and the second received signal, then the position of the object is determined based on the first azimuth, second azimuth, and relative motion data.

Although the above description is made with reference to a two-dimensional array receiver, it is also expected that the same method can be applied to a one-dimensional array to determine the position of the object in the direction of the movement of the movable portion relative to the fixed portion.

It should be understood that motion data of up to, or even thousands of, positions and the corresponding received data may be acquired during the movement of the movable portion relative to the fixed portion, thereby achieving more accurate positioning of the object. In particular, as data at thousands of positions relative to the object can be acquired, it is no longer necessary to dispose a plurality of receivers, and accurate positioning of the object can be achieved with just one receiver. This also minimizes the issue of inaccurate positioning due to an object other than the object to be positioned blocking a certain or some receivers.

Although the method of the present disclosure is described with reference to steps 110 - 130 above, this is not limiting and may be modified to obtain further effects. In an example, whether there is movement of the movable portion relative to the fixed portion can be first determined based on motion data, for example, whether the refrigerator door is open and whether the retractable portion of the drawer is open. If it is determined that there is movement of the movable portion relative to the fixed portion, the received signals from the receiver are received and used to position the object with the corresponding motion data. The corresponding received signals and motion data may be identified and paired based on the timestamp, and then the object is positioned based on the paired received signals and motion data.

In an example, the corresponding motion data and received signals may be recorded and stored when movement of the movable portion relative to the fixed portion is detected. The object is positioned based on the above motion data and received signals when it is detected that the movable portion is no longer moving relative to the fixed portion.

In an example, the corresponding positioning message is sent to the user after the object is positioned, such as by being displayed to the user via a display disposed on the item, or sent to a particular user mobile device for display or as text notification to the user.

In an example, the above step 130 may be performed after the relative movement of the movable portion and the fixed portion stops, and the motion data and corresponding received signal are matched to determine the position of the object. However, this is clearly not limiting. During actual use, the user may desire to be prompted of the position of the object in the drawer while pulling open the drawer, and therefore, the above matching and determination of the position of the object may also be performed upon receipt of appropriate motion data and received signals during the relative movement of the movable portion and fixed portion. The above matching may be performed in real time.

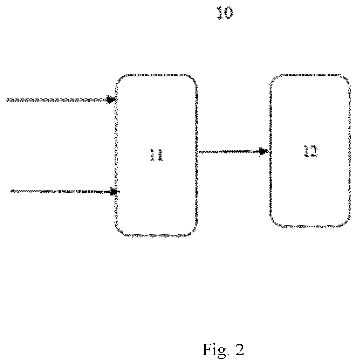

Fig. 2 shows a block diagram of a device 10 for positioning an object in an item comprising a confined space according to an example of the present disclosure. As shown in Fig. 2, the device 10 comprises at least an acquisition unit 11
and a positioning unit 12.

The acquisition unit 11 used to acquire motion data representing the movement of the movable portion relative to the fixed portion and received signals from a receiver. The acquisition unit can acquire motion data representing the movement of the movable portion relative to the fixed portion directly from, for example, a motion sensor, or process the motion data acquired to obtain the corresponding angle and/or distance.

The positioning unit 12 receives motion data and received signals from the acquisition unit 11 and then positions the object based on the received motion data and the received signals, i.e., determines the position of the object in the confined space.

In an example, the received signals comprise a first received signal acquired at a first position of the movable portion relative to the fixed portion and a second received signal acquired at a second position of the movable portion relative to the fixed portion, the motion data comprising relative motion data between the first position and the second position, and the relative motion data may, for example, be calculated based on the first motion data at the first position and the second motion data at the second position, and does not preclude the presence of a sensor directly used to measure relative motion data. The positioning unit 12 determines the position of the object based on the first received signal, second received signal, and relative motion data, particularly in the direction of relative movement of the movable portion relative to the fixed portion.

Although the device 10 of the present disclosure is described with reference to the above acquisition unit 11 and positioning unit 12, this is not limiting, and the device 10 may be conceived to comprise other units.

In an example, the device 10 comprises a motion sensor that can be disposed on the movable portion, the fixed portion, or the object and is used for detecting the movement of the movable portion relative to the fixed portion.

In an example, the device 10 comprises a Bluetooth low-power transmitter disposed in the fixed portion and is used for detecting the movement of the movable portion relative to the fixed portion. The Bluetooth low-power transmitter may also be conceived to be disposed in the same portion of the item as the object to facilitate the receipt of signals by the corresponding receiver from the Bluetooth low-power transmitter, so as to determine the movement of the movable portion relative to the fixed portion of the item.

In an example, the device 10 further comprises a receiver that can be disposed in a portion different from the portion in which the object is placed in the item such that the receiver can move relative to the object when the movable portion moves relative to the fixed portion, and the receiver can receive the corresponding received signals in response to the signals transmitted by the transmitter disposed on the object when it moves relative to the object.

These received signals may serve as the basis for calculating the corresponding AOA data for positioning the object in the confined space of the item. In an example, the receiver comprises at least two receiving antennas arranged in a direction intersecting the direction of movement of the movable portion relative to the fixed portion, and may comprise a plurality of receiving antennas arranged in a one-dimensional array, and may also comprise a plurality of receiving antennas arranged in a two-dimensional array.

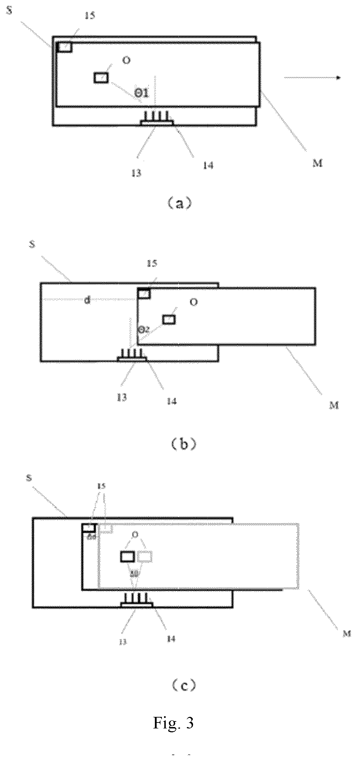

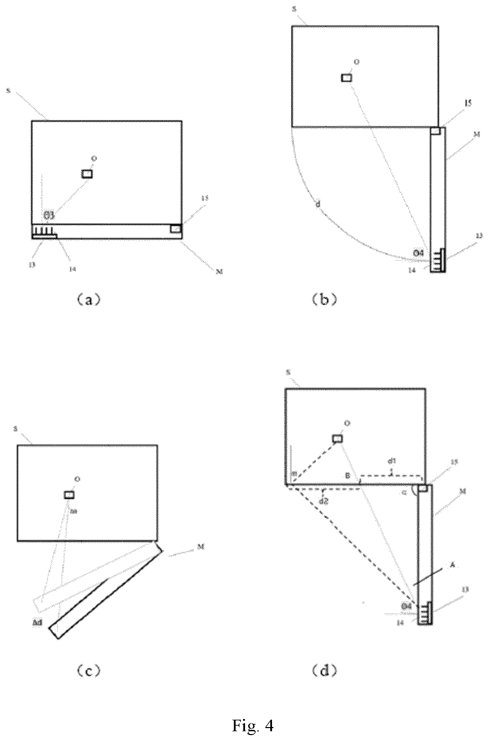

Figs. 3 and 4 show an item with a confined space and different states thereof according to different examples of the present disclosure. As shown in (a) in Fig. 3, the item with a confined space is a drawer that comprises a fixed portion S, i.e., a frame, and a movable portion M, i.e., a retractable body. The retractable body can move in the direction of the arrow relative to the frame. The object O to be positioned is positioned within the retractable body. A transmitter (not shown) can be disposed with the item.

A receiver 13 is disposed in the fixed portion, i.e., on the frame as shown in Fig. 3. The receiver comprises a plurality of receiving antennas 14, in particular a two-dimensional array of receiving antennas. A motion sensor 15 is disposed on the movable portion M and serve as a motion detection device. As the user moves the retractable body, the motion sensor 15 can measure the movement of the movable portion M relative to the fixed portion S, such as the relative movement distance. As shown in (b) in Fig. 3, the retractable body is pulled out. The relative movement distance measured by the motion sensor as compared to (a) in Fig. 3 is d. Using the AOA technique, the received signals received by the receiver at different positions allows the angle of the object O relative to the receiver at various positions to be calculated, such as θ1 and θ2. As such, the relative motion angle between the object and the receiver between the two positions can be determined as the movable portion moves. For the two positions represented by (a) and (b) in Fig. 3, the relative motion angle thereof is the sum of θ1 and θ2.

Although two different positions when the item is used are described with reference to the starting position and final position of the retractable body of the drawer shown in (a) and (b) in Fig. 3, they are not limiting, and may be conceived of as movement of the retractable body between any two positions. As shown in (c) in Fig. 3, the retractable body moves from a first position represented by black to a second position represented by gray.

In the scenario as shown in (c) in Fig. 3, the motion sensor 15 can detect the relative movement distance Δd between the first position and the second position. Based on the first received signal and second received signal received by the receiver at the first position and the second position, and utilizing the AOA technique, the relative motion angle Δθ of the object relative to the receiver between the two positions can be determined; and then the object O can be positioned based on the above relative movement distance and relative motion angle.

Although the motion sensor 15 is disposed on the movable portion shown in Fig. 3, it may also be conceived to be disposed on the object O that moves with the movable portion.

As shown in (a) in Fig. 4, the item with a confined space is a refrigerator that comprises a fixed portion S, i.e., a body, and a movable portion M, i.e., a door. The door can move (may include rotation) relative to the body. The object O to be positioned is positioned within the body. A transmitter (not shown) can be disposed with the object,
wherein the receiver 13 is positioned on the door and the motion sensor 15 is positioned on the door as the movable portion M. At the initial position as shown in the drawing and utilizing the AOA technique, it is possible to determine that the angle of the item O relative to the receiver is ▲3 based on the received data received by the receiving antenna.

As can be seen in the drawing, the relative movement distance of the door that serves as the movable portion M detected by the motion sensor from the closed state shown in (a) of Fig. 4 to the open state shown in (b) of Fig. 4 is d (illustrated by the outer diameter end of the door where there is rotational motion), while the angle of the object O relative to the receiver is θ4, and the relative motion angle may be determined based on θ3 and θ4. The accurate position of the object can be calculated based on the relative movement distance and the relative motion angle.

Although the starting position and final position of the door that serves as the movable portion M shown in (a) and (b) of Fig. 4 are used to describe the two different positions when the item is used, they are not limiting, and may also be conceived as movement of the refrigerator door between any two positions. As shown in (c) in Fig. 4, the door moves from a first position represented by gray to a second position represented by black. The object can similarly be positioned based on the relative movement distance at these two locations Δd and the relative motion angle Δ. The specific positioning method may be as described with reference to Fig. 3. The type of data detected by the motion sensor 15 is not defined in the present disclosure as long as the detected data is sufficient to position the object O by utilizing the AOA technique, and this includes the relative movement distance or relative movement angle.

Although the situation where a motion sensor detects the relative movement distance is described above, it is not limiting. In a particular case, the motion sensor 15 may also detect the relative movement angle between the movable portion and the fixed portion without detecting the relative movement distance between the two. The object O can be positioned even without calculating the relative movement distance of the movable portion relative to the fixed portion. For example, (d) in Fig. 4 shows how the object O is positioned with the relative movement angle detected.

As shown in (d) in Fig. 4, with the door of the refrigerator that serves as the movable portion M open, the motion sensor 15 detects the relative movement angle α of the movable portion relative to the fixed portion (this may be
an angle of any size). The AOA technique is utilized to calculate the azimuth of the object relative to the receiver at each position based on the signals received by the receiver at each position, for example azimuth θ4 at the position shown in (d) of Fig. 4 and azimuth θ3 at the initial position shown in (a) of Fig. 4. Where the azimuth θ4 of the object relative to the receiver is known, the size of the angle A may be determined as 90° - θ4. As the size of the angle A and the relative movement angle α are known and the width of the refrigerator door is also known, the size of d1 may be determined. Where the refrigerator width is known, the size of d2 may also be determined, i.e. equivalent to the refrigerator width minus d1. Since d2 can be determined, the angle B can be calculated as equal to 180° - A - α, the angle θ3 can be determined based on the received signals of the receiver, and the position of the object O can be determined.

Figs. 3 - 4 above are merely examples for purposes of illustration, and other arrangements may also be conceived. For example, in the embodiment of Fig. 4, a Bluetooth low-power transmitter may be disposed on the refrigerator body that serves as the fixed portion S in place of the motion sensor 15 disposed on the refrigerator door that serves as the movable portion M.

In addition, in an example, the device 10 may further comprise a determination unit (not shown) that determines whether there is movement of the movable portion relative to the fixed portion based on motion data. If it is determined that there is movement of the movable portion relative to the fixed portion, the acquisition unit 11
the received signals from the receiver. It does not exclude the possibility that the device 10 may also comprise, for example, a display unit which may be used to display positioning results.

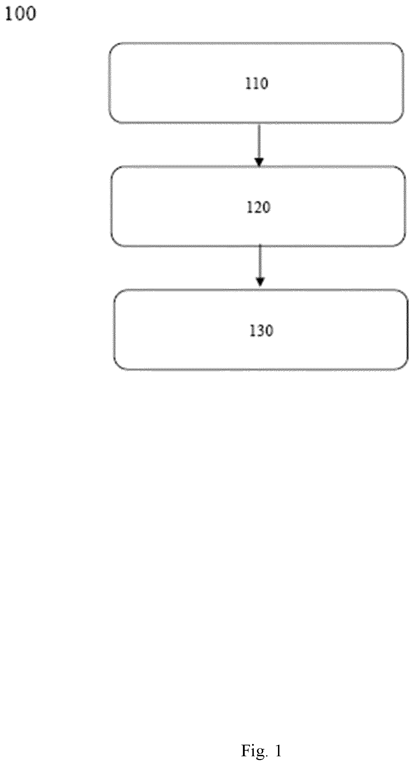

Various examples of the method and device of the present disclosure are described above with reference to Figs. 1 - 4, which are capable of being combined with one another for different effects without limitation to the type of subject matter. Moreover, the various units/steps/processing mentioned above are not limiting, and the functions of each of the above units/steps/processing can be merged//changed/modified to obtain the corresponding effects.

The functions of the various units of the method and device of the present disclosure can be achieved by software or the corresponding hardware, or the functions of the various units above can be achieved by means of a processor, for example, a processor can read computer programs in memory and run these computer programs to achieve the functions of the various units above. In an example, the above device of the present disclosure may also be implemented by a memory and a processor.

It should be understood that the method according to the various examples of the present disclosure can be achieved by computer programs/software. These software can be loaded into a working memory of the processor and used to perform the method according to various examples of the present disclosure when run.

It should be understood that the method and device according to the present disclosure may be performed by a device having processing capabilities carried in the item itself, or may be performed at a remote location. Exemplary examples of the present disclosure cover both below: computer programs/software of the present disclosure created/used from the outset, and existing programs/software converted to computer programs/software of the present disclosure by way of an update.

According to other examples of the present disclosure, a computer program product is provided, such as a machine (e.g., a computer)-readable medium, such as CD-ROM, which comprises a computer program code therein that, when executed, causes the computer or processor to perform the method according to the various examples of the present disclosure. The machine-readable medium is, for example, an optical storage medium or solid state medium supplied with or as part of other hardware.

According to other examples of the present disclosure, an item with a confined space is provided, comprising a device for positioning an object in the item according to various examples of the present disclosure. For example, the item may be a refrigerator.

Specific examples of the present disclosure are described above. Other examples are within the scope of the appended Claims. In some cases, actions or steps described in the Claims can be performed in a different order than that of the examples and still achieve the desired results. In addition, the processes depicted in the accompanying drawings do not necessarily require specific or continuous orders to achieve the desired results. In some examples, multitasking and parallel processing are also possible or advantageous.

The present disclosure is described above with reference to specific examples, and it should be understood by those skilled in the art that the technical solution of the present disclosure can be achieved in a variety of ways without departing from the spirit and basic features of the present disclosure. Specific examples are merely illustrative and not limiting. In addition, any combination of these examples is possible to achieve the purposes of the present disclosure. The scope of protection of the present disclosure is defined by the appended Claims.

The word "comprises" in the Specification and Claims does not preclude the presence of other elements or steps, and the expression of "first," "second," "third," and the sequence of various steps shown in the drawings relating to each "step" do not limit their order or number. The functions of the various elements illustrated in the Specification or recorded in the Claims may also be split or combined by a corresponding plurality of elements or a single element.

## Claims

1. A method for positioning an object in an item comprising a confined space is provided, the item comprising a fixed portion and a movable portion that can move relative to the fixed portion, the object being placed in the fixed portion or the movable portion, the method comprising
acquiring motion data representing the movement of the movable portion relative to the fixed portion;
acquiring received signals from a receiver disposed in a portion different from the portion in which the object is placed in the item such that the receiver can move relative to the object when the movable portion moves relative to the fixed portion, and the receiver can receive the corresponding received signals in response to the signals transmitted by the transmitter disposed on the object when it moves relative to the object; and
positioning the object in the confined space based on the motion data and the received signals.

2. The method according to Claim 1, wherein the receiver comprises at least two receiving antennas arranged in a direction intersecting the direction of movement of the movable portion relative to the fixed portion.

3. The method according to Claim 2, wherein the receiver comprises a plurality of receiving antennas arranged as a one-dimensional array or a two-dimensional array.

4. The method according to Claim 3, wherein the receiver comprises a plurality of receiving antennas arranged as a two-dimensional array, the plurality of receiving antennas being arranged within a plane intersecting the direction of movement of the movable portion relative to the fixed portion.

5. The method according to Claim 1, further comprising
determining whether there is movement of the movable portion relative to the fixed portion based on motion data and if it is determined that there is movement of the movable portion relative to the fixed portion, acquiring the received signals from the receiver; and/or
matching the motion data and the received signals of the same timestamp.

6. The method according to any one of Claims 1 - 5, wherein the item comprises a drawer, wherein the fixed portion comprises the frame of the drawer, the movable portion comprises the retractable body of the drawer, the object being placed in the retractable body; or,
the item comprises a refrigerator, a wardrobe, or a cupboard, wherein the fixed portion comprises the body of the item and the movable portion comprises the door of the item, the object being placed in the body.

7. The method according to any one of Claims 1 - 5, wherein the transmitter is a Bluetooth low-power beacon device.

8. The method according to any one of Claims 2-5, wherein the received signals comprise a first received signal acquired at a first position of the movable portion relative to the fixed portion and a second received signal acquired at a second position of the movable portion relative to the fixed portion, the motion data comprise relative motion data of the movable portion between the first position and the second position;
the position of the object is determined based on the first received signal, the second received signal, and the relative motion data.

9. The method according to Claim 8, wherein the relative motion data comprise relative movement distance or relative movement angle;
the position of the object is determined based on the first received signal, the second received signal, and the relative motion data comprises
a first azimuth of the object relative to the receiver at the first position and a second azimuth of the object relative to the receiver at the second position are determined based on the first received signal and the second received signal;
determine the position of the object based on the first azimuth, the second azimuth, and the relative motion data.

10. A device for positioning an object in an item comprising a confined space is provided, the item comprising a fixed portion and a movable portion that can move relative to the fixed portion, the object being placed in the fixed portion or the movable portion, the device comprising
an acquisition unit for acquiring motion data representing the movement of the movable portion relative to the fixed portion and received signals from a receiver disposed in a portion different from the portion in which the object is placed in the item such that the receiver can move relative to the object when the movable portion moves relative to the fixed portion, and the receiver can receive the corresponding received signals in response to the signals transmitted by the transmitter disposed on the object when it moves relative to the object; and
a positioning unit for positioning the object in the confined space based on the motion data and the received signals.

11. The device according to Claim 10, further comprising a motion sensor disposed on the object, the fixed portion, or the movable portion and being used to detect the movement of the movable portion relative to the fixed portion, wherein the acquisition unit is used to acquire the motion data detected by the motion sensor.

12. The device according to Claim 10, further comprising a Bluetooth low-power transmitter disposed in the same portion of the item as the object and being used to detect the movement of the movable portion relative to the fixed portion.

13. The device according to any one of Claims 10 - 12, further comprising the receiver that can be disposed in the fixed portion or the movable portion, the receiver comprising at least two receiving antennas arranged in a direction intersecting the direction of the movement of the movable portion relative to the fixed portion.

14. The device according to Claim 13, wherein the received signals comprise a first received signal acquired at a first position of the movable portion relative to the fixed portion and a second received signal acquired at a second position of the movable portion relative to the fixed portion, the
motion data comprise relative motion data of the movable portion between the first position and the second position;
wherein the positioning unit determines the position of the object based on the first received signal, the second received signal, and the relative motion data.

15. The device according to Claim 14, wherein the relative motion data comprise relative movement distance or relative movement angle;
the positioning unit is also used to
determine a first azimuth of the object relative to the receiver at the first position and a second azimuth of the object relative to the receiver at the second position based on the first received signal and the second received signal; and
determine the position of the object based on the first azimuth, the second azimuth, and the relative motion data.

16. An item comprising a confined space is provided, the item comprising a fixed portion and a movable portion that can move relative to one another, where the fixed portion or the movable portion can be used to place an object, the item comprising
a device for positioning the object in the item comprising a confined space according to any one of Claims 10-15

17. A computer-readable medium that stores a computer program that, when executed by a processor, causes the processor to perform the method according to any one of Claims 1 - 9.
